(19) **Europäisches Patentamt / European Patent Office / Office européen des brevets**

(11) **EP 2 537 445 B1**

(12) **EUROPEAN PATENT SPECIFICATION**

(45) Date of publication and mention
of the grant of the patent:
**13.05.2015 Bulletin 2015/20**

(51) Int Cl.:
***B29C 44/06*** *(2006.01)*   ***B60N 2/70*** *(2006.01)*
***A47C 27/15*** *(2006.01)*

(21) Application number: **11744735.9**

(22) Date of filing: **18.02.2011**

(86) International application number:
**PCT/JP2011/053464**

(87) International publication number:
**WO 2011/102449 (25.08.2011 Gazette 2011/34)**

(54) **CUSHION PAD AND METHOD FOR MANUFACTURING SAME**

POLSTERUNTERLAGE UND VERFAHREN ZU IHRER HERSTELLUNG

COUSSIN-GALETTE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.02.2010  JP 2010035271**

(43) Date of publication of application:
**26.12.2012   Bulletin 2012/52**

(73) Proprietor: **Inoac Corporation
Nagoya-shi, Aichi 450-8691 (JP)**

(72) Inventor: **KONDO, Satoshi
Aichi (JP)**

(74) Representative: **Hoffmann Eitle
Patent- und Rechtsanwälte PartmbB
Arabellastraße 30
81925 München (DE)**

(56) References cited:
**EP-A2- 0 453 784      FR-A1- 2 897 023
JP-A- 1 280 413      JP-A- 62 183 790
JP-B2- 59 014 342      US-A1- 2005 210 595**

**Description**

TECHNICAL FIELD

The present invention relates to a cushion pad and method for manufacturing the same.

BACKGROUND ART

A seat installed in a vehicle, such as a car, has for example a seat cushion supporting a lower part of a passenger's body, a seat back provided on a rear side of the seat cushion and supporting an upper part of the passenger's body, and a headrest provided on an upper part of the seat back and supporting the head of the passenger. Among these, the seat cushion is generally formed by covering a urethane foam cushion pad with a skin, such as a leather, or a fabric.

Conventionally, as a urethane foam cushion pad to be used for the vehicle seat, it is considered preferable to have a property that a core layer, which is a central portion, sags more positively than an upper surface layer, which is a portion on a side of an upper surface, when a passenger sits thereon and thereby a load is imparted to the upper surface of the cushion pad. A vehicle seat using a cushion pad having such a property provides excellent sitting comfort and supporting property. Specifically, when the upper surface layer is resistant to sagging, the upper surface layer can firmly support the buttocks of the passenger sat thereon. Furthermore, when the elasticity of the core layer is high and the layer can sufficiently sag, the core layer absorbs the vibration of a vehicle body and transversal G while the vehicle is moving, so that the posture of the passenger can be stabilized. Therefore, the passenger can stably sit on the seat cushion and also the posture is less likely to be off-balanced, so that the passenger less likely to get tired even when sitting for a long period of time. Thus, when the core layer is allowed to sag more positively than the upper surface layer of the cushion pad, the sitting comfort and the supporting property of a vehicle seat is improved.

As cushion pads having the property that the core layer sags more positively than the upper surface layer, for example, cushion pads of Patent Documents 1 and 2 are known. The cushion pad of Patent Document 1 gives the property that the core layer sags more positively than the upper surface layer by combining a plurality of urethane foams having different physical properties. On the other hand, the cushion pad of Patent Document 2 is integrally formed of a single foaming material and gives the property that the core layer sags more positively than the upper surface layer by setting the ratio of the density of the upper surface layer to the density of the core layer in a predetermined range and also by setting the rigidity of the upper surface layer higher than the rigidity of the core layer. Moreover, since the cushion pad of Patent Document 2 is integrally molded from a single material, there is an advantage that it is easier to manufacture as compared with the cushion pad of the Patent Document 1 where a plurality of urethane foams are combined.

US 2005/0210595 A1 forms the basis for the two-part of independent claim 1 and discloses a foam mattress that includes a reticulated, viscoelastic foam that makes up the mattress in whole or in part. The foam mattress may include a plurality of zones of foam and/or a plurality of layers of foam, where one of the layers may be reticulated urethane for improved breathability and humidity resistance, as well as heat dissipation. However, said mattress is not intended for the abortion of vibrations that occur in a vehicle.

PRIOR ART DOCUMENTS

PATENT DOCUMENTS

Patent Document 1: JP 9-051918 A
Patent Document 2: JP 2002-065409

SUMMARY OF THE INVENTION

PROBLEMS TO BE SOLVED BY THE INVENTION

Since the rigidity of the upper surface layer of the cushion pad of Patent

Document 2 is set high, when a passenger sits thereon, the upper surface layer is likely to maintain a flat state without deformation following the buttocks of the passenger. Therefore, a favorable contact face between the buttocks of the passenger and the upper surface layer may not be provided and thus a sufficient fit to the buttocks of the passenger may not be obtained.

The present invention has been made based on the findings that, as a result of extensive studies by the inventor, a cushion pad having the property that the core layer sags more positively than the upper surface layer is obtained by defining the viscoelastic properties (loss tangent tan $\delta$) of the upper surface layer and the core layer to be specific values and the cushion pad provides an excellent fit. An object of the invention is to provide a cushion pad having the property that the core layer sags more positively than the upper surface layer and providing an excellent fit in a sitting condition and a method for manufacturing the same.

The present invention is defined in independent claims 1 and 7. Dependent claims 2 to 6 specify preferred embodiments of the cushion pad claimed in independent claim 1.

MEANS FOR SOLVING THE PROBLEMS

In order to achieve the above object, the present invention provides the following.

(1) A cushion pad according to claim 1.

ADVANTAGES OF THE INVENTION

According to the present invention, the viscoelastic property (tan $\delta_1$) of the upper surface layer and the viscoelastic property (tan $\delta_{n+1}$) of the core layer are set so that they satisfy a specific relation. Thereby, there is provided a property that the core layer sags more positively than the upper surface layer when a load is applied to a cushion pad from the upper surface side in a thickness direction. Accordingly, the sitting comfort and supporting property of the cushion pad become satisfactory.

Moreover, the upper surface layer has a viscoelastic property (tan $\delta_1$) of 0.065 to 0.144 and the upper surface layer is in a so-called low resilient urethane foam state. Therefore, the upper surface layer easily deform into a shape following the buttocks of a passenger and thus a favorable contact face between the buttocks of the passenger and the upper surface layer can be provided. Thus, the cushion pad according to the present invention provides an excellent fit in a sitting condition.

BRIEF DESCRIPTION OF THE DRAWINGS

Fig. 1 is a cross-sectional view of a cushion pad of an embodiment.
Fig. 2A is a side view of a cushion pad in a state before compression.
Fig. 2B is a side view of a cushion pad in a compressed state.
Fig. 3A is a graph showing measurement results of viscoelastic properties (tan $\delta$) of the upper surface layer and the core layer of the cushion pad of Example 1.
Fig. 3B is a graph showing measurement results of viscoelastic properties (tan $\delta$) of the upper surface layer and the core layer of the cushion pad of Example 7.
Fig. 3C is a graph showing measurement results of viscoelastic properties (tan $\delta$) of the upper surface layer and the core layer of the cushion pad of Comparative Example 2.
Fig. 4 is a graph showing a sagging rate in a compressed state of each layer of each cushion pad. In the drawing, (a) represents Example 1, (b) represents Example 7, and (c) represents Comparative Example 2.
Fig. 5 shows images photographing a compressed state of each cushion pad. In the drawing, (a) represents Example 1, (b) represents Example 7, and (c) represents Comparative Example 2.

EMBODIMENTS OF THE INVENTION

Hereinafter, a cushion pad according to an embodiment of the present invention will be described with reference to the drawings. The cushion pad 1 of the present embodiment is a urethane foam member forming inside of a seat cushion to be a seat part of a vehicle seat and is formed to be an outer shape about the same as that of the seat cushion. Moreover, the cushion pad 1 is integrally formed of a single resin material.

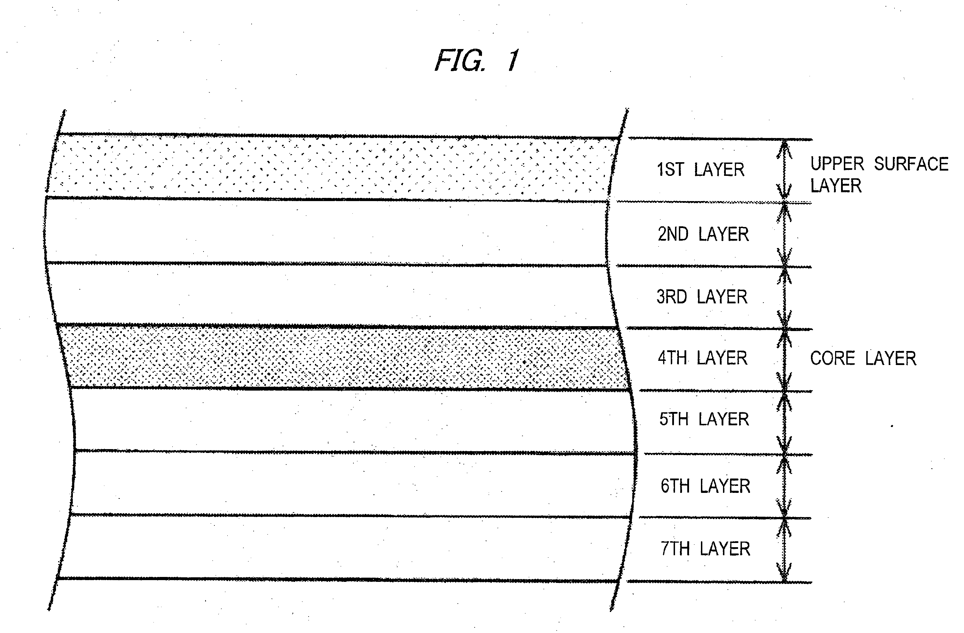

In this description, equally dividing the cushion pad 1 into 2n+1 layers (n being an integer of 1 to 5), the uppermost layer is defined as a first layer, and the first layer is referred to as an upper surface layer 2. Similarly, a central layer is defined as an n+1th layer, and the n+1th layer is referred to a core layer 3. An example in which the cushion pad 1 is divided into 7 layers (n=3) is shown in Fig. 1. In this case, the first layer at the uppermost part is the upper surface layer 2, and the fourth layer (3+lth layer) at the central part is the core layer 3. The cushion pad 1 is designed such that the viscoelastic properties (tan $\delta$) of the upper surface layer 2 and the core layer 3 have specific values.

Here, the viscoelastic property (tan $\delta$) represents loss tangent tan $\delta$, which is a ratio (G"/G') of a storage modulus (G') corresponding to elasticity and a loss modulus (G") corresponding to viscosity, and is a numerical value showing a dynamic characteristic of a polymer having both of elasticity and viscosity. For example, in a urethane foam, the ratio of viscosity increases as the viscoelastic property (tan $\delta$) increases and the foam becomes a low resilient urethane foam. Also, the ratio of elasticity increases as the viscoelastic property (tan $\delta$) decreases and the foam becomes a high resilient urethane foam. Moreover, when the cushion pad 1 receives an instantaneous load, the foam is less likely to sag as the viscoelastic property (tan $\delta$) increases and the foam easily sags as the viscoelastic property (tan $\delta$) decreases.

In the cushion pad 1, the viscoelastic property (tan $\delta_1$) of the upper surface layer 2 at 36°C and at a frequency of 1 Hz is set in the range of 0.065 to 0.144, preferably in the range of 0.075 to 0.144, and more preferably in the range of 0.110 to 0.144. Moreover, the viscoelastic property (tan $\delta_{n+1}$) of the core layer 3 at 36°C and at a frequency of 1 Hz is set in the range of 0.052 to 0.102, preferably in the range of 0.060 to 0.102, and more preferably in the range of 0.082 to 0.102. Further, the ratio of the viscoelastic property (tan $\delta_{n+1}$) of the core layer 3 to the viscoelastic property (tan $\delta_1$) of the upper surface layer 2 is set so as to be in the range of 0.7 to 0.8, more preferably in the range of 0.70 to 0.79, and further preferably in the range of 0.70 to 0.76. Furthermore, it is preferred that the viscoelastic property (tan $\delta$) of each layer gradually decreases from the upper surface layer 2 to the core layer 3. When the ratio of the viscoelastic property (tan $\delta_{n+1}$) of the core layer to the viscoelastic property (tan $\delta_1$) of the upper surface layer is less than 0.7, the resilience of the resulting cushion pad is too low, so that the cushioning characteristic decreases and there is a concern that a user is caused such a feeling that the buttocks come into contact with a metal frame which supports the cushion pad. Moreover, when the ratio (tan $\delta_{n+1}$) exceeds 0.80, the cushion pad cannot sufficiently absorb the vibration at vehicle running and thus there is a concern that the user easily gets tired when sits thereon for a long period of time.

According to the cushion pad 1 of the present embodiment, the property that the core layer sags more positively than the upper surface layer is provided by setting the viscoelastic properties (tan $\delta$) of the upper surface layer 2 and the core layer 3 in the above ranges, particularly providing a large difference between the viscoelastic properties (tan $\delta$) of the upper surface layer 2 and the core layer 3. Particularly, in the case where a load is instantaneously applied to the cushion pad 1, the upper surface layer 2 having a large viscoelastic property (small elasticity) is does not sag so much and the core layer 3 having a small viscoelastic property (large elasticity) easily sags. Therefore, when a vehicle body is vibrated while the vehicle is moving, where a load is instantaneously applied to the cushion pad 1, the cushion pad 1 of the embodiment can suitably support the buttocks of the passenger.

It is advantageous that the cushion pad 1 is designed such that the hardness of the upper surface layer 2 and the core layer 3 have specific values. Specifically, it is preferred that the hardness of the core layer 3 measured using an F-type hardness meter manufactured by ASKER is set in the range of 35 to 70 and the ratio of the hardness of the core layer 3 to the hardness of the upper surface layer 2 is set in the range of 0.50 to 0.85 and is further preferably set in the range of 0.70 to 0.80. In the case where the hardness of the upper surface layer 2 and the core layer 3 is set in the above ranges, the property that the core layer sags more positively than the upper surface layer becomes more remarkable.

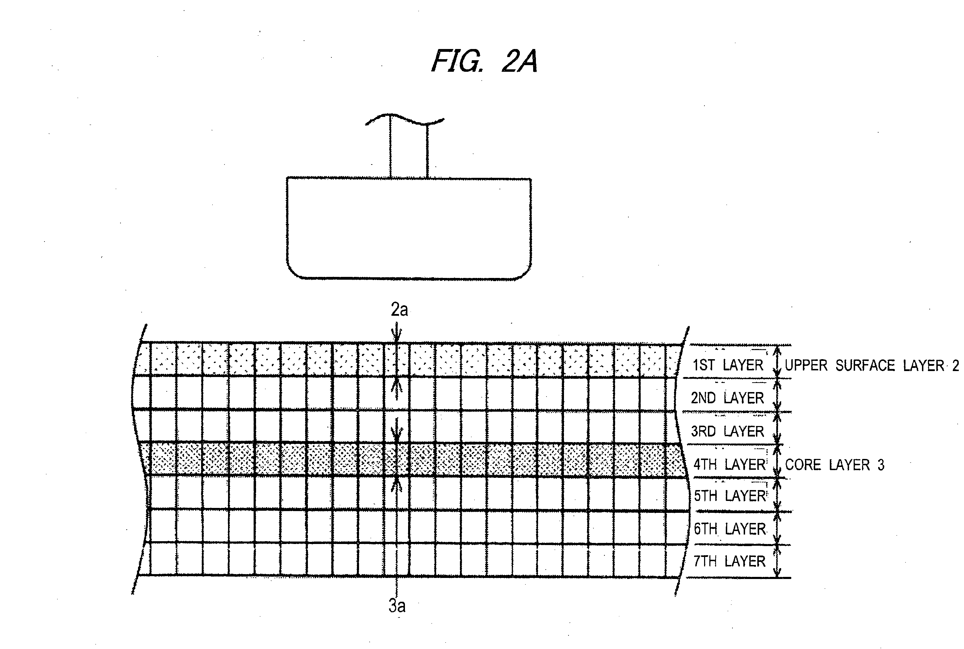

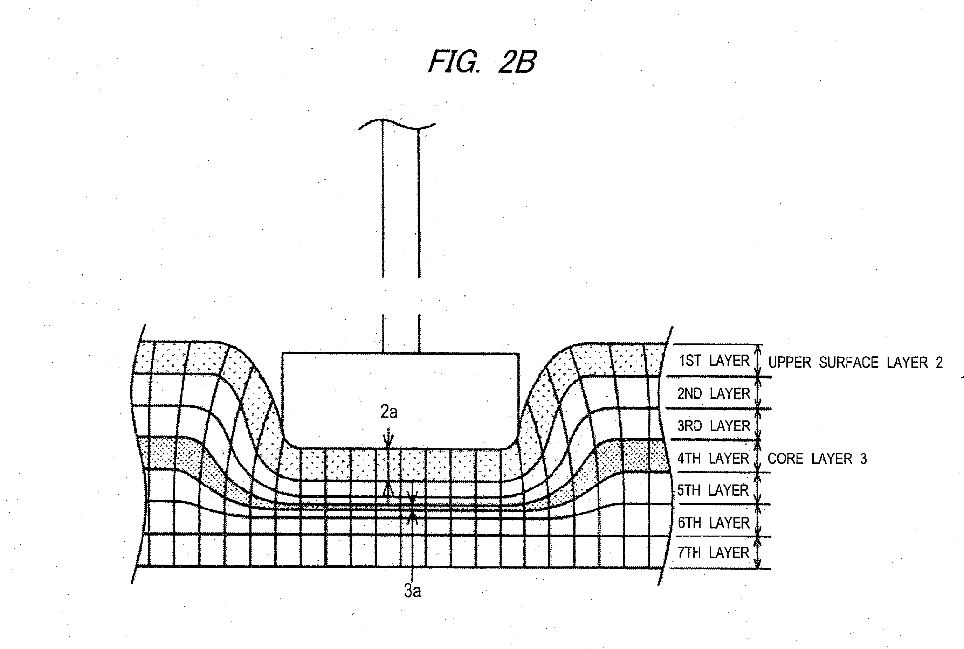

Fig. 2A and Fig. 2B schematically show a pre-compression state of the cushion pad 1 shown in Fig. 1 before a compression load is applied and a compressed state after the compression load is applied. As shown in Fig. 2A, in the pre-compression state, the thickness of each layer is equal in all layers including the thickness 2a of the upper surface layer 2 and the thickness 3a of the core layer 3. Moreover, as shown in Fig. 2B, in the post-compression state, the thickness 3b of the core layer 3 becomes smaller than the thickness 2b of the upper surface layer 2. That is, the sagging rate $T_{n+1}$ becomes larger than the sagging rate $T_1$ of the upper surface layer 2. In this regard, the above sagging rate T can be calculated according to the following expression.

$$\text{"Sagging rate T (\%)"} = (\text{"thickness of each layer before compression"} - \text{"thickness of each layer after compression"}) / \text{"thickness of each layer before compression"} \times 100$$

Here, the ratio of the sagging rate ($T_{n+1}$) of the core layer 3 to the sagging rate ($T_1$) of the upper surface layer 2 is preferably in the range of 1.1 to 2.5, more preferably in the range of 1.3 to 2.3, and further preferably in the range of 1.5 to 2.2 in the state that the cushion pad 1 is compressed by 40 to 50% (a numerical value determined according to ("Thickness of cushion pad 1 before compression" - "Thickness of cushion pad 1 after compression") / "Thickness of cushion pad 1 before compression" x 100) in a thickness direction. In this case, an effect of improving the sitting comfort of the cushion pad 1 and an effect of improving the supporting property thereof can be surely obtained. Moreover, it is preferred that the sagging rate T of each layer is set so that the rate gradually increases in sequence. In this case, the effect of improving the sitting comfort and the effect of improving the supporting property can be further enhanced.

The following will explain the method for manufacturing the cushion pad 1 of the embodiment. The cushion pad 1 can be, for example, manufactured by reacting a foaming material containing a polyol, a polyisocyanate, and water and foaming and curing it in a forming mold having a cavity of a desired cushion pad shape.

As the polyol to be contained in the foaming material, for example, a polyether polyol or a polyester polyol is used. Examples of the polyether polyol include polypropylene glycol, polytetramethylene glycol, modified compounds thereof, and compounds obtained by adding alkylene oxides to glycerin. Examples of the polyester polyol include condensed polyester polyols obtained by reacting polycarboxylic acids such as adipic acid and phthalic acid with polyols such as ethylene glycol, diethylene glycol, propylene glycol, and glycerin, lactone-based polyester polyols, and polycarbonate-based polyols. As for the polyols, the number of hydroxyl groups and hydroxyl value can be altered by controlling the kind of raw material components, the molecular weight, the degree of condensation, and the like.

In this regard, of these specific examples of the polyols, only one compound may be singly contained or two of more compounds may be contained in combination. Particularly, it is preferred to use a high-molecular-weight polyol and a low-molecular-weight polyol having 2 to 4 functional groups in combination ("molecular weight" in this description means number-average molecular weight). The molecular weight of the high-molecular-weight polyol is preferably 3500 to 8000, more preferably 5000 to 7000. The molecular weight of the low-molecular-weight polyol is preferably 500 to 3000, more preferably 1000 to 2000. In the case where the high-molecular-weight polyol and the low-molecular-weight polyol are used in combination, the ratio of the content of the high-molecular-weight polyol to the content of the low-molecular-weight polyol is preferably in the range of 4 to 24, more preferably in the range of 5 to 14. Moreover, it is preferred that the high-molecular-weight polyol is contained in an amount of 88 to 100 parts by mass, preferably 88 to 96 parts by mass with respect to 100 parts by mass of the whole polyol and the low-molecular-weight polyol is preferably contained in an amount of 0 to 12 parts by mass. As the polyol, in addition to the above high-molecular-weight polyol and low-molecular-weight polyol, the other polyol may be further contained.

As mentioned above, the viscoelastic property (tan $\delta$) represents (G")/(G') = loss tangent tan$\delta$ which is determined by the storage modulus (G') corresponding to elasticity and the loss modulus (G") corresponding to viscosity. In a urethane foam, the loss modulus corresponding to viscosity is altered by controlling the molecular weight of the polyol(s) contained in the foaming material and, as a result, the viscoelastic property (tan $\delta$) is altered. Particularly, in the case where the above high-molecular-weight polyol and low-molecular-weight polyol are used as the polyol in combination, there is a tendency that the ratio of the viscoelastic property (tan $\delta_{n+1}$) of the core layer 3 to the viscoelastic property (tan $\delta_1$) of the upper surface layer 2 of the resulting cushion pad 1 decreases as the ratio of the above low-molecular-weight polyol increases. By controlling the ratio of the above high-molecular-weight polyol and low-molecular-weight polyol utilizing the tendency, desired viscoelastic properties can be imparted to the cushion pad 1.

The polyisocyanate to be contained in the foaming material is a compound having a plurality of isocyanate groups. Examples of the polyisocyanate include tolylene diisocyanate (TDI), 4,4-diphenylmethane diisocyanate (MDI), 1,5-naphthalene diisocyanate (NDI), triphenylmethane triisocyanate, xylylene diisocyanate (XDI), hexamethylene diisocyanate (HDI), dicyclohexylmethane diisocyanate, and isophorone diisocyanate (IPDI). In this regard, of these specific examples of the polyisocyanate, only one compound may be singly contained or two of more compounds may be contained in combination.

An isocyanate index of the polyisocyanate is for example, set in the range of 85 to 130. The isocyanate index is an index representing an equivalent ratio of the isocyanate group of the polyisocyanate to the active hydrogen group of the polyol, water as a foaming agent, and the like as percentage. That is, the fact that the isocyanate index exceeds 100 means that the isocyanate group of the polyisocyanate is more than the active hydrogen group of the polyol and the like.

Moreover, with regard to water in the foaming material, there is a tendency that the ratio of the viscoelastic property (tan $\delta_{n+1}$) of the core layer 3 to the viscoelastic property (tan $\delta_1$) of the upper surface layer 2 decreases, as the content increases. Utilizing the tendency, desired viscoelastic properties can be imparted to the cushion pad 1 by controlling the content of water in the foaming material. This tendency is considered to be due to the following reason.

Water mainly functions as a foaming agent of foaming a polyurethane to form a polyurethane foam. In the foaming step of the polyurethane, since the inner wall of a mold has a temperature lower than that of the center of the cavity, the core layer formed at the cavity center of the mold foams at high magnification (number density of cells increases) and thus foaming pressure is generated. On the other hand, the upper surface layer formed in the vicinity of the inner wall of the mold is pressed with the foaming pressure of the core layer and thus cured without foaming, so that the number density of the cells is small as compared with that in the core layer. Since the foaming pressure increases when the content of water increases, the density difference between the core layer and the upper surface layer is enlarged.

Moreover, since a polyurethane foam sags through crushing of the cells, the polyurethane foam is easy to sag as the density of the cells increases. When the content of water increases, the density difference between the core layer and the upper surface layer is enlarged, so that the core layer is more likely to sag as compared with the upper surface layer and the ratio (tan $\delta_{n+1}$/tan $\delta_1$) of the viscoelastic properties of the core layer to the upper surface layer decreases. Therefore, the ratio of the viscoelastic properties of the core layer to the upper surface layer can be controlled by controlling the content of water.

Furthermore, since water reacts with an isocyanate group to form a urethane bond or a urea bond, water also functions as a crosslinking agent for enhancing the hardness of the polyurethane foam. Since the number of crosslinked structures to be formed is larger in the upper surface layer containing smaller number of cells than in the core layer, an increase in the viscoelastic property owing to the increase in the content of water is larger in the upper surface layer than in the core layer. Therefore, when the content of water increases, the ratio of the viscoelastic properties of the core layer to the upper surface layer decreases.

For the above reason, the content of water in the foaming material can be 1.8 to 4.0 parts by mass with respect to 100 parts by mass of the polyol and preferred is 2.1 to 3.7 parts by mass and more preferred is 2.4 to 3.4 parts by mass. In the case where the content of water in the foaming material is set in the above range, the ratio of the viscoelastic property ($\tan \delta_{n+1}$) of the core layer 3 to the viscoelastic property ($\tan \delta_1$) of the upper surface layer 2 of the cushion pad 1 can be set in the range of 0.70 to 0.80. In this regard, when the content of water in the foaming material is less than 2.1 parts by mass with respect to 100 parts by mass of the polyol, there is a case where a sufficient viscoelastic properties cannot be imparted to the cushion pad 1 by only the influence of water. In this case, it is sufficient to include 10 to 12 parts by mass of a low-molecular-weight polyol per 100 parts by mass of the polyol(s).

Moreover, according to necessity, the foaming material may contain components other than the aforementioned components, for example, a catalyst, another foaming agent, a foam stabilizer, a crosslinking agent, a colorant, and a flame retardant. The catalyst accelerates a resinification reaction (urethane-forming reaction) of the polyol with the polyisocyanate, a foaming reaction of the polyisocyanate with water as a foaming agent, and the like. Therefore, the foaming material preferably contains the catalyst. Examples of the catalyst include amine catalysts and metal catalysts. Examples of the amine catalysts include tin catalysts of triethylamine, triethylenediamine, tetramethylguanidine, and the like. Examples of the metal catalysts include organometallic catalysts such as phenylmercury propionate salt and lead octenate.

Examples of the other foaming agent include pentane, cyclopentane, hexane, cyclohexane, dichloromethane, and carbon dioxide gas. The foam stabilizer allows the foaming induced by the foaming agent to proceed smoothly and controls the size and uniformity of the cells of the urethane foam. Therefore, the foaming material preferably contains the foam stabilizer. Examples of the foam stabilizer include silicone-based foam stabilizers, fluorine-containing compound-based foam stabilizers, and surfactants.

The crosslinking agent forms crosslinked structures in the urethane foam to enhance crosslinking density. Therefore, the foaming material preferably contains the crosslinking agent. As the crosslinking agent, for example, a polyol having a molecular weight of 100 to 500 is used. Examples of such a polyol include polyethylene glycol, diethylene glycol, polypropylene glycol, glycerin, trimethylolpropane, pentaerythritol, sorbitol, and the like. Moreover, as the colorant and the frame retardant, known ones to be used for polyurethane foams can be employed.

The reaction of the polyol with the polyisocyanate is carried out according to a usual method and a one-shot method or a prepolymer method is adopted. The one-shot method is a method of directly reacting the polyol with the polyisocyanate. The prepolymer method is a method of reacting a part of the polyol and a part of the polyisocyanate in advance to form a prepolymer having an isocyanate group or a hydroxyl group at the terminal end and reacting the prepolymer with the polyol and the polyisocyanate. The one-shot method is a preferable method since the manufacturing process includes only one step and limitations on manufacturing conditions are little as compared with the prepolymer method, as well as the manufacturing cost can be reduced.

Then, by foaming and curing the reaction mixture (foaming material), which has been mixed and stirred by the above one-shot method or the prepolymer method, in a forming mold having a cavity of a desired shape, there is obtained a integrally molded cushion pad which has the property that the core layer sags more positively than the upper surface layer, and provides an excellent fit feeling in a sitting condition.

Here, also by providing a temperature difference between the temperature of the core layer part and the temperature of the upper surface layer part at the foaming and curing in the forming mold, the ratio of the viscoelastic property ($\tan \delta_{n+1}$) of the core layer 3 to the viscoelastic property ($\tan \delta_1$) of the upper surface layer 2 of the resulting cushion pad 1 can be altered. Specifically, when the temperature of the core layer part is set higher than the temperature of the upper surface layer part, there is a tendency that the ratio of the viscoelastic property ($\tan \delta_{n+1}$) of the core layer 3 to the viscoelastic property ($\tan \delta_1$) of the upper surface layer 2 decreases. Thus, also by providing the temperature difference between the core layer part and the upper surface layer part at the foaming and curing, a desired viscoelastic properties can be imparted to the cushion pad 1. In this regard, as a method for providing the temperature difference between the core layer part and the upper surface layer part, for example, a method of controlling the temperature of the forming mold may be mentioned.

The following will describe advantages and effects according to the present embodiment.

(1) In the cushion pad 1 of the present embodiment, the viscoelastic property ($\tan \delta_1$) of the upper surface layer 2 is set within 0.065 to 0.144 and the viscoelastic property ($\tan \delta_{n+1}$) of the core layer 3 is set within 0.052 to 0.102. Also, the ratio of the viscoelastic property ($\tan \delta_{n+1}$) of the core layer 3 to the viscoelastic property ($\tan \delta_1$) of the upper surface layer 2 is set within 0.7 to 0.8. That is, a large difference is provided in the viscoelastic property between the upper surface layer 2 and the core layer 3.

Accordingly, the property that the core layer 3 sags more positively than the upper surface layer 3 is imparted to the cushion pad 1 and thus the sitting comfort and the supporting property are improved. In this regard, the cushion pad 1 of the embodiment obtains the property that the core layer 3 sags more positively than the upper surface layer 2 by providing a large difference in the viscoelastic property (tan $\delta$) between the upper surface layer 2 and the core layer 3. Therefore, a large density difference is not necessarily provided between the upper surface layer 2 and the core layer 3, unlike the cushion pad of the above Patent Document 2. For example, even when the ratio of the density of the core layer 3 to the density of the upper surface layer 2 is set at less than 1.13, the property that the core layer 3 sags more positively than the upper surface layer 2 can be imparted to the cushion pad.

Moreover, in the cushion pad 1, the viscoelastic property (tan $\delta_1$) of the upper surface layer is 0.065 to 0.144 and the ratio of viscosity is set high, so that the upper surface layer 2 is in a so-called low resilient urethane foam state. Therefore, the upper surface layer 2 easily deforms into a shape following the buttocks of a passenger and thus a contact face between the buttocks of the passenger and the upper surface layer 2 can be suitably secured. Thus, the cushion pad 1 provides an excellent fit feeling in a sitting condition.

(2) In the cushion pad 1, the ratio of the sagging rate ($T_{n+1}$) of the core layer 3 to the sagging rate ($T_1$) of the upper surface layer 2 is set within 1.1 to 2.5 in the case where the entire cushion pad is compressed by 40 to 50% in a thickness direction. Thereby, the effect of improving the sitting comfort and the effect of improving the supporting property can be more surely obtained.

(3) The cushion pad 1 is set so that the viscoelastic property (tan $\delta$) of each layer gradually decreases and the sagging rate of each layer gradually increases, from the upper surface layer 2 to the core layer 3. Thereby, the effect of improving the sitting comfort and the effect of improving the supporting property can be more enhanced.

(4) The cushion pad 1 uses a foaming material containing a polyol and a polyisocyanate and containing 1.8 to 4.0 parts by mass of water with respect to 100 parts by mass of the polyol, as the foaming material. As the content of water in the foaming material increases, there is a tendency that the ratio of the viscoelastic property (tan $\delta_{n+1}$) of the core layer 3 to the viscoelastic property (tan $\delta_1$) of the upper surface layer 2 of the resulting cushion pad 1 decreases. Particularly, in the case where the content of water in the foaming material is 1.8 to 4.0 parts by mass with respect to 100 parts by mass of the polyol, the change in the viscoelastic properties of the cushion pad 1 is easily estimated and desired viscoelastic properties can be easily imparted to the cushion pad 1.

(5) In the cushion pad 1 according to the embodiment, a high-molecular-weight polyol having a number-average molecular weight of 3500 to 8000 and a low-molecular-weight polyol having a number-average molecular weight of 500 to 3000 and having 2 to 4 functional groups are used in combination as the polyol to be contained in the foaming material. In the case where the above high-molecular-weight polyol and the above low-molecular-weight polyol are used in combination as the polyol, there is a tendency that the ratio of the viscoelastic property (tan $\delta_{n+1}$) of the core layer 3 to the viscoelastic property (tan $\delta_1$) of the upper surface layer 2 decreases as the ratio of the above low-molecular-weight polyol increases. Therefore, in the case where the above high-molecular-weight polyol and the above low-molecular-weight polyol are used in combination as the polyol, the change in the viscoelastic properties of the cushion pad 1 is easily estimated and desired viscoelastic properties can be easily imparted to the cushion pad 1.

In this regard, the configuration of the n+2th layer to the 2n+1th layer that are layers positioned at a lower side than the core layer 3 is not particularly limited. For example, the layers may be configured such that the viscoelastic property (tan $\delta$) gradually increases from the n+2th layer to the 2n+1th layer and the sagging rate gradually decreases or the layers may be configured such that they correspond to the n-th layer to the first layer that are layers positioned at an upper side than the core layer 3 (to be symmetrical with respect to the core layer 3).

EXAMPLES

The following will further specifically explain the above embodiment with reference to Examples and Comparative Examples. Each foaming material having a polyol, a polyisocyanate, water, a catalyst, a foam stabilizer, and a crosslinking agent was prepared in each composition shown in Table 1. Then, the foaming material was mixed at ordinary temperature and also is foamed and cured in a predetermined forming mold set at 60°C, thereby obtaining a cushion pad of each of Examples and Comparative Examples having a block shape of about 300 mm in length x 300 mm in width x 70 mm in thickness. The temperature of the core layer part at foaming and curing of the foaming material in the forming mold is estimated to be about 100 to 150°C that is equal to or higher than the set temperature of the forming mold. Comparative Example 2 in Table 1 corresponds to a general cushion pad. Each numerical value in a column representing each component in Tables 1 and 2 shows the content of the component and a unit thereof is part by mass.

In the foaming materials shown in Tables 1 and 2, the following were used.
PPG5000: polypropylene glycol having a number-average molecular weight of 5000 (Excenol 828, manufactured by Asahi Glass Co., Ltd.)

POP: polymer polyol having a number-average molecular weight of 5000 (KC-401, manufactured by Sanyo Chemical Industries, Ltd.)

PPG1000: polypropylene glycol having a number-average molecular weight of 1000 and 2 functional groups (D-1000, manufactured by Mitsui Chemicals, Inc.)

TDI: 2,4-toluene diisocyanate, 2,6-toluene diisocyanate (Colonate T-80, manufactured by Nippon Polyurethane Industry Co., Ltd.)

Catalyst 1: amine-based catalyst (BL-11, manufactured by Air Products and Chemicals, Inc.)

Catalyst 2: amine-based catalyst (33LV, manufactured by Air Products and Chemicals, Inc.)

Foam stabilizer 1: silicon-based foam stabilizer (B8719LF, manufactured by Evonik)

Crosslinking agent 1: glycerin (manufactured by NOF Corporation)

Moreover, according to the methods shown below, the viscoelastic properties, hardness, and sagging rates were measured for Examples 1 to 14 and Comparative Examples 1 and 2 obtained.

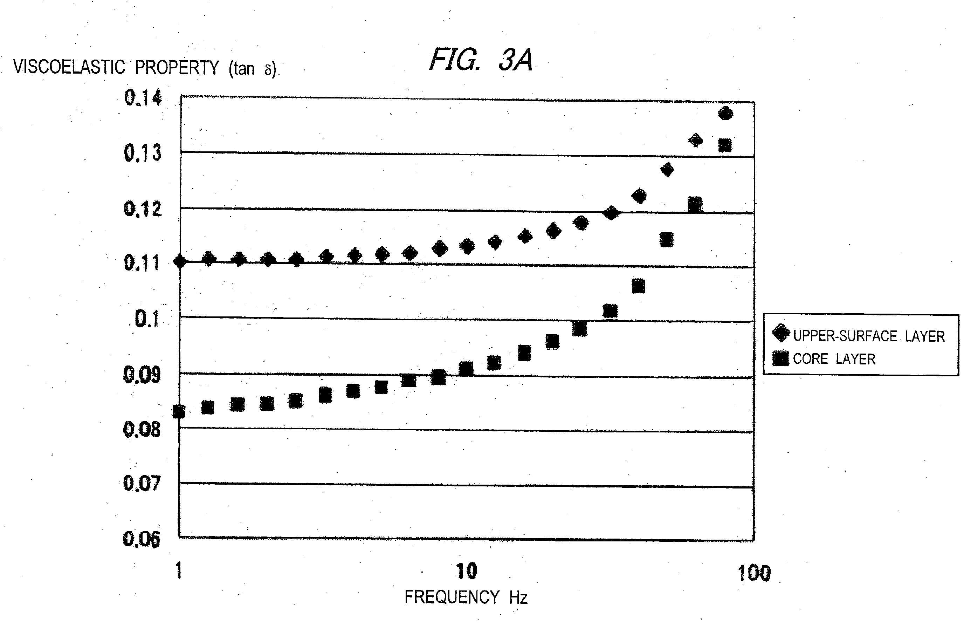

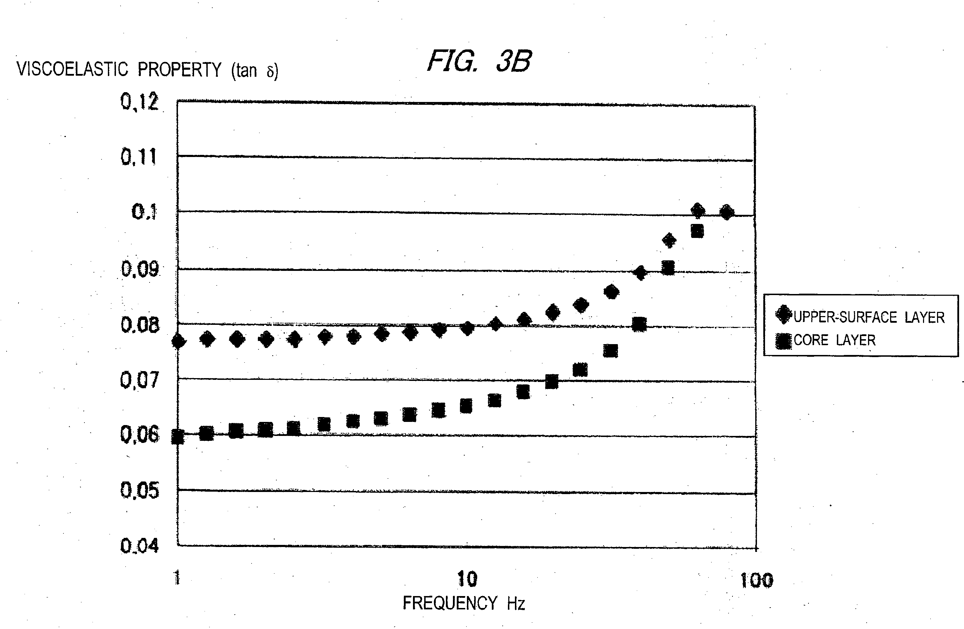

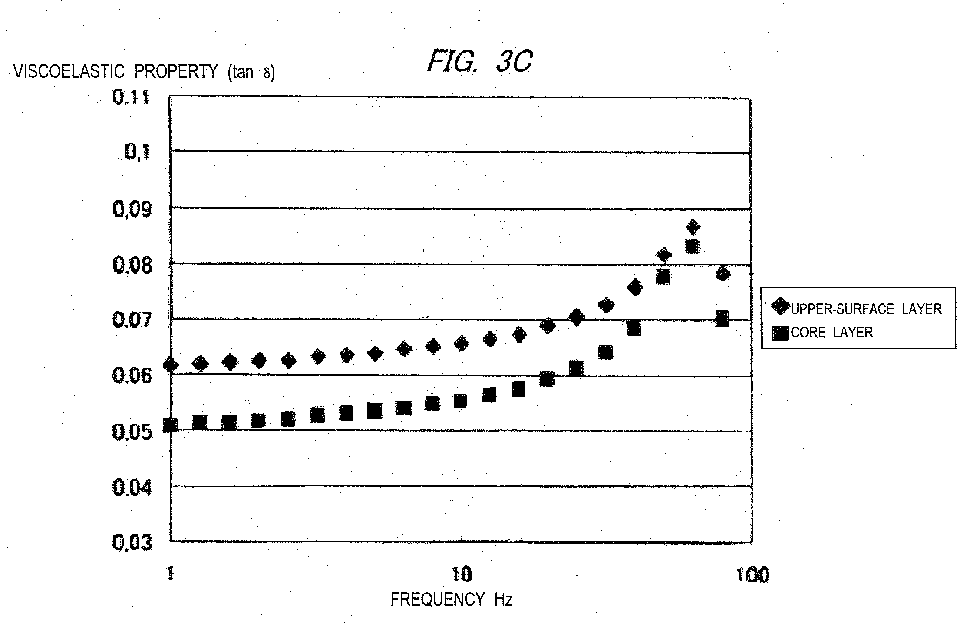

[Measurement of Viscoelastic Property] Each of the cushion pads of Examples and Comparative Examples was divided into 7 layers in a thickness of 10 mm each. For the four layers from the first layer that is an upper surface layer to the fourth layer that is a core layer, the viscoelastic property (tan $\delta$) at a frequency of 1 to 100 Hz (36°C) was measured using a rheometer (ARES) manufactured by TA Instruments. Fig. 3A, Fig. 3B and Fig. 3C successively show the results of Example 1, Example 7, and Comparative Example 2. In this regard, the sample size was a diameter of 25 and a thickness of 8 mm (2 mm of the under part of each layer was cut and 8 mm of the upper part was used as a sample).

An example of the results is shown in Fig. 3A to Fig. 3C. Fig. 3A to Fig. 3C show the results of Example 1, Example 7, and Comparative Example 2 respectively in this order. Then, based on the results, the viscoelastic properties of the upper surface layer and the core layer of Example 1, Example 7, and Comparative Example 2 at 36°C and at a frequency of 1 Hz were determined. Moreover, for other Examples and Comparative Example, the viscoelastic properties of the upper surface layer and the core layer at 36°C and at a frequency of 1 Hz were determined in the same manner. The results thereof are shown in Tables 1 and 2.

[Measurement of Hardness] Each of the cushion pads of Examples and Comparative Examples was divided into 7 layers in a thickness of 10 mm each. For the first layer that is an upper surface layer and the fourth layer that is a core layer, the hardness was measured using an F-type hardness meter manufactured by ASKER. In this regard, the sample size was a length of 50 mm, a width of 50 mm, and a thickness of 10 mm.

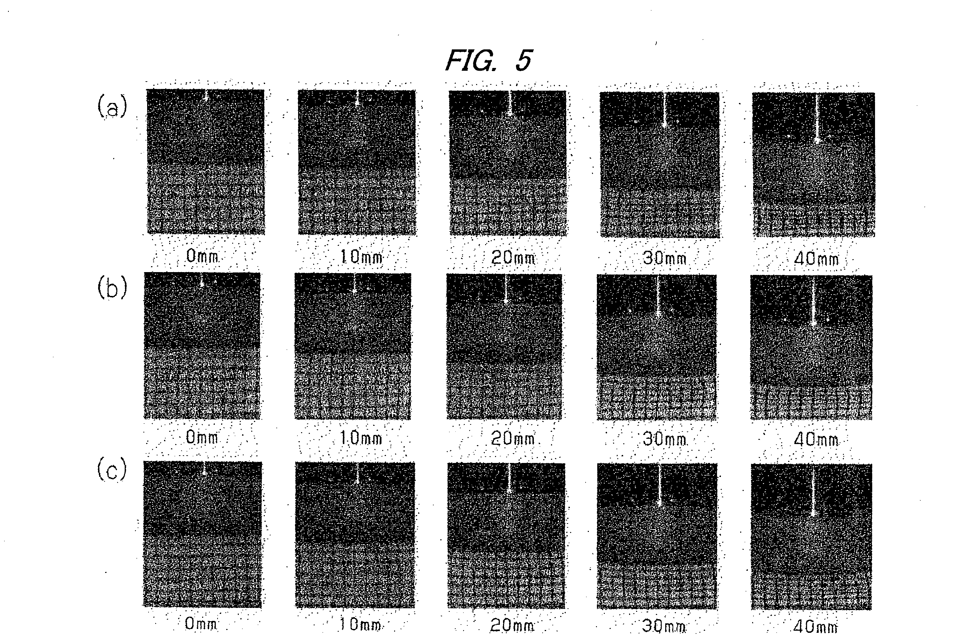

[Measurement of Sagging Rate] To each of the cushion pads of Example 1 and 7 and Comparative Example 2 where a lattice-patterned line at intervals of 10 cm had been drawn on the lateral surface beforehand, a load was applied at a pressurizing rate of 500 mm/minute using a pressurizing plate having a size of $\phi$200, thereby compressing each cushion pad. Fig. 5 shows images in a state that the cushion pads of Example 1 and 7 and Comparative Example 2 were compressed by 0, 10, 20, 30, and 40 mm. Fig. 5A, Fig. 5B and Fig. 5C successively show the results of Example 1, Example 7, and Comparative Example 2.

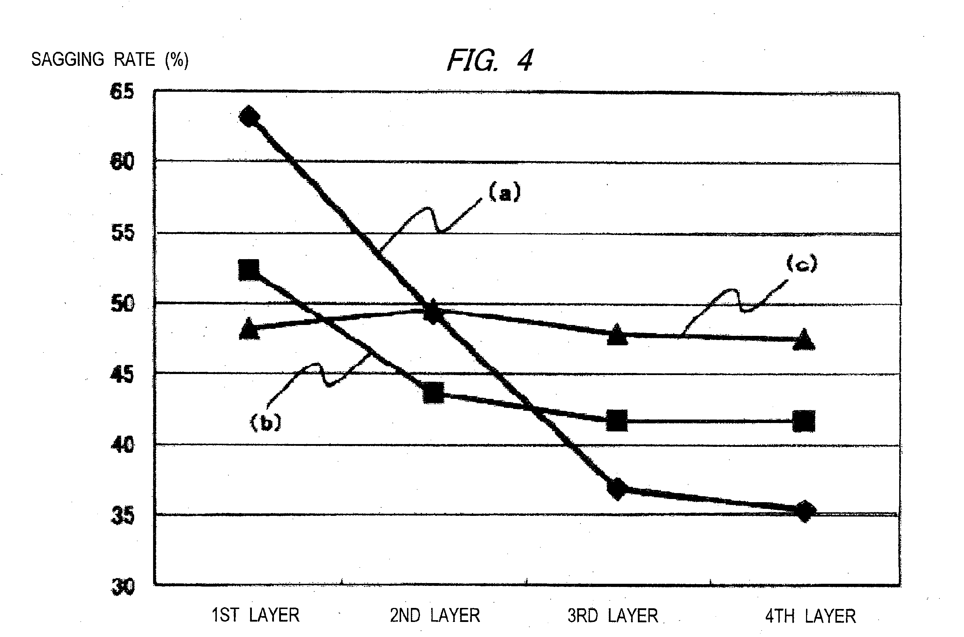

Then, based on the images shown in Fig. 5, the thickness of each layer of the first layer (upper surface layer) to the fourth layer (core layer) in the state that the pad was compressed by 30 mm (state of about 43% compression) was measured and the sagging rate of each layer was calculated. Fig. 4 is a graph on which the sagging rate of each layer is plotted. In Fig. 4, a line segment (b) represents Example 7 and the line segment (c) represents Comparative Example 2.

[Measurement of Apparent Density] The overall density in Tables 1 and 2 is an apparent density of the entire cushion pad including the upper surface layer foamed in the mold and is calculated by dividing the mass of a molded article by cavity volume.

The upper surface layer density is an apparent density of the upper surface layer (layer also including a skin layer that is the uppermost layer) of the cushion pad foamed in the mold. The core density is an apparent density excluding the skin layer of the cushion pad foamed in the mold. Each of the cushion pads of Examples and Comparative Examples was divided into 7 layers in a thickness of 10 mm each. For the first layer that is an upper surface layer and the fourth layer that is a core layer, the apparent density of each layer was calculated in accordance with JIS K7222:2005. Further, the free foam density is an apparent density excluding the surface part (skin layer) in a free foam obtained in the case where the foaming material was foamed and cured at ordinary temperature under atmospheric pressure not in the forming mold. The above free foam was separately manufactured using each of the same foaming materials as in Examples and Comparative Examples and the density was calculated for the free foam in accordance with JIS K7222:2005.

In this regard, the pack ratio is a pushing in rate of the foam material to be subjected to free foaming into the mold cavity volume. It was calculated according to the following expression.

$$Pack\ ratio = Overall\ density\ /\ Free\ foam\ density$$

A preferable range of the pack ratio is 1.22 to 1.92.

The apparent density of each of the upper surface layer and the core layer, overall density, free foam density, and pack ratio of Examples and Comparative Examples obtained are shown in Tables 1 and 2. In this regard, the units of individual densities shown in Tables 1 and 2 are all "$kg/cm^3$".

First, changes in the density, viscoelastic property, hardness, and sagging rate were measured when the content of water was altered with the mixing ratio of PPG5000, POP, and PPG1000 in the polyol being constant. The measurement results are shown in Table 1.

[Table 1]

| | | Comparative Example 1 | Example 1 | Example 2 | Example 3 | Example 4 | Example 5 | Comparative Example 2 | Example 6 | Example 7 |
|---|---|---|---|---|---|---|---|---|---|---|
| Component | PPG5000 | 48 | 48 | 48 | 48 | 51 | 51 | 55 | 55 | 55 |
| | POP | 45 | 45 | 45 | 45 | 45 | 45 | 45 | 45 | 45 |
| | PPG1000 | 7 | 7 | 7 | 7 | 4 | 4 | 0 | 0 | 0 |
| | TDI | 28 | 33 | 37 | 41 | 30 | 33 | 28 | 30 | 31 |
| | Water | 1.8 | 2.4 | 3.0 | 3.4 | 2.1 | 2.4 | 2.0 | 2.1 | 2.4 |
| | Catalyst 1 | 0.1 | 0.1 | 0.1 | 0.1 | 0.1 | 0.1 | 0.1 | 0.1 | 0.1 |
| | Catalyst 2 | 0.4 | 0.4 | 0.4 | 0.4 | 0.4 | 0.4 | 0.4 | 0.4 | 0.4 |
| | Foam Stabilizer | 1.0 | 1.0 | 1.0 | 1.0 | 1.0 | 1.0 | 1.0 | 1.0 | 1.0 |
| | Crosslinking Agent | 1.0 | 1.0 | 1.0 | 1.0 | 1.0 | 1.0 | 1.0 | 1.0 | 1.0 |
| | Total | 132.3 | 137.9 | 142.5 | 146.9 | 134.6 | 137.9 | 132.5 | 134.6 | 135.9 |
| Isocyanate Index | | 104 | 102 | 100 | 99 | 103 | 102 | 104 | 104 | 102 |
| Density | Overall | 65 | 65 | 65 | 65 | 65 | 65 | 65 | 65 | 65 |
| | Upper Surface Layer | 66 | 68 | 70 | 71 | 67 | 69 | 66 | 67 | 68 |
| | Core | 62 | 60 | 59 | 59 | 62 | 60 | 62 | 62 | 61 |
| | Free Foam | 57 | 50 | 40 | . 34 | 53 | 50 | 54 | 53 | 50 |
| | Pack Ratio | 1.140 | 1.300 | 1.625 | 1.912 | 1.226 | 1.300 | 1.204 | 1.226 | 1.300 |
| Viscoelasticity | Upper Surface Layer | 0.0874 | 0.1100 | 0.1380 | 0.1436 | 0.0761 | 0.0961 | 0.0616 | 0.0655 | 0.0768 |
| | Core Layer | 0.0701 | 0.0828 | 0.0982 | 0.1011 | 0.0601 | 0.0727 | 0.0508 | 0.0520 | 0.0593 |
| | Core Layer / Upper Surface Layer | 0.8021 | 0.7527 | 0.7116 | 0.7040 | 0.7898 | 0.7568 | 0.8247 | 0.7939 | 0.7721 |
| Hardness | Upper Surface Layer | 65 | 72 | 80 | 82 | 69 | 71 | 66 | 67 | 70 |
| | Core Layer | 57 | 53 | 57 | 59 | 55 | 54 | 57 | 56 | 55 |
| | Core Layer / Upper Surface Layer | 0.8769 | 0.7361 | 0.7125 | 0.7195 | 0.7971 | 0.7606 | 0.8636 | 0.8358 | 0.7857 |

(continued)

| Sagging rate | | Comparative Example 1 | Example 1 | Example 2 | Example 3 | Example 4 | Example 5 | Comparative Example 2 | Example 6 | Example 7 |
|---|---|---|---|---|---|---|---|---|---|---|
| | Upper Surface Layer | 46.0 | 35.3 | 32.5 | 31.3 | 40.7 | 38.0 | 47.8 | 43.7 | 41.6 |
| | Core Layer | 47.9 | 63.2 | 68.0 | 68.5 | 53.0 | 58.5 | 48.8 | 49.0 | 52.3 |
| | Core Layer / Upper Surface Layer | 1.041 | 1.790 | 2.092 | 2.188 | 1.302 | 1.540 | 1.021 | 1.121 | 1.257 |

From the viewpoints of the sitting comfort and the supporting property, the cushion pad to be used for a vehicle seat preferably has the following properties:

(1) the ratio (tan $\delta_{n+1}$/tan $\delta_1$) of the viscoelastic property of the core layer to the viscoelastic property of the upper surface layer is 0.7 to 0.8,
(2) the ratio ($T_{n+1}/T_1$) of the sagging rate of the core layer to the sagging rate of the upper surface layer is 1.1 or more, and
(3) the hardness of the core layer and the hardness of the upper surface layer on an F-type hardness meter manufactured by ASKER are 50 to 70 and 65 to 85, respectively.

From Table 1, in order to satisfy all the properties of the above (1) to (3), it is sufficient that the content of water is set to be 2.1 parts by mass to 3.4 parts by mass. The content of water is preferably 2.1 parts by mass to 3.7 parts by mass, more preferably 2.4 parts by mass to 3.4 parts by mass. The reasons why the density, viscoelastic property, hardness, and sagging rate change as shown in Table 1 when the content of water increases are surmised as follows.

(Relation between Content of Water and Density and Hardness)

Water is a foaming agent and forms cells in the foaming material. The regions where the number density of the cells is large is shown in Table 1 as regions having a low apparent density in the foam. From Table 1, since the apparent density of the core layer is lower than the apparent density of the upper surface layer, it can be confirmed that the number density of the cells is larger in the core layer than in the upper surface layer. It is surmised that this is because the upper surface layer positioned in the vicinity of the inner wall of the forming mold is pressed by the core layer and cured without foaming. Moreover, since the foaming pressure increases when the content of water increases, it is surmised that the upper surface layer is pressed by the core layer and the inner wall of the mold and cured without foaming frequently. In this regard, it can be confirmed from Table 1 that the difference in density between the upper surface layer and the core layer becomes remarkable as the content of water increases. Moreover, it can be also confirmed from Table 1 that the hardness of the upper surface layer remarkably increases as the content of water increases.

(Relation between Content of Water and Sagging Rate)

Since a foam is deformed though elastic crushing of cells in the foam, the core layer having a large number density of the cells is easier to sag as compared with the upper surface layer having a small number density of the cells. Here, as mentioned above, since the difference in density of the cells between the core layer and the upper surface layer increases when the content of water increases, it is surmised that the core layer is further easier sag as compared with the upper surface layer and the ratio of the sagging rates of the upper surface layer and the core layer also increases. Therefore, in order to control the ratio of the sagging rate ($T_{n+1}/T_1$) of the core surface layer to that of the upper surface layer to 1.1 or more, that is, to achieve the property that the core layer sags more positively than the upper surface layer, the content of water is preferably 2.1 parts by mass or more.

(Relation between Content of Water and Viscoelastic Property)

A foam show a lower viscoelastic property when it is easier to sag. As mentioned above, since the core layer is further easier to sag as compared with the upper surface layer as the content of water increases, the ratio (tan $\delta_{n+1}$/tan $\delta_1$) of the viscoelastic property of the core layer to the viscoelastic property of the upper surface layer decreases. This phenomenon can be also confirmed from Table 1.

Moreover, since water also functions as a crosslinking agent, the crosslinked structure is formed to a larger degree and sagging becomes difficult when the content of water increases, so that the viscoelastic property increases. Since the crosslinking density is larger in the upper surface layer than in the core layer owing to the difference in temperature between the upper surface layer and the core layer, an increase of the viscoelastic property owing to an increase of the content of water is larger in the upper surface layer than in the core layer. Therefore, it is also considered that the ratio (tan $\delta_{n+1}$/tan $\delta_1$) of the viscoelastic property of the core layer to the viscoelastic property of the upper surface layer decreases when the content of water increases.

Then, changes in the density, viscoelastic property, hardness, and sagging rate were measured when the content of water was constant and the mixing ratio of PPG5000, POP, and PPG1000 in the polyol was changed. The measurement results are shown in Table 2.

[Table 2]

| | | Example 8 | Example 9 | Example 10 | Example 11 | Example 12 | Example 13 | Example 14 |
|---|---|---|---|---|---|---|---|---|
| Component | PPG5000 | 55 | 51 | 48 | 46 | 43 | 55 | 51 |
| | POP | 45 | 45 | 45 | 45 | 45 | 45 | 45 |
| | PPG1000 | 0 | 4 | 7 | 9 | 12 | 0 | 4 |
| | TDI | 31 | 33 | 33 | 34 | 34 | 30 | 30 |
| | Water | 2.4 | 2.4 | 2.4 | 2.4 | 2.4 | 2.1 | 2.1 |
| | Catalyst 1 | 0.1 | 0.1 | 0.1 | 0.1 | 0.1 | 0.1 | 0.1 |
| | Catalyst 2 | 0.4 | 0.4 | 0.4 | 0.4 | 0.4 | 0.4 | 0.4 |
| | Foam Stabilizer | 1.0 | 1.0 | 1.0 | 1.0 | 1.0 | 1.0 | 1.0 |
| | Crosslinking Agent | 1.0 | 1.0 | 1.0 | 1.0 | 1.0 | 1.0 | 1.0 |
| | Total | 135.9 | 137.9 | 137.9 | 138.9 | 138.9 | 134.6 | 134.6 |
| Isocyanate Index | | 102 | 102 | 102 | 101 | 101 | 104 | 103 |
| Density | Overall | 65 | 65 | 65 | 65 | 65 | 65 | 65 |
| | Upper Surface Layer | 68 | 69 | 68 | 68 | 68 | 67 | 67 |
| | Core | 61 | 60 | 60 | 60 | 60 | 62 | 62 |
| | Free Foam | 50 | 50 | 50 | 50 | 50 | 53 | 53 |
| | Pack Ratio | 1.300 | 1.300 | 1.300 | 1.300 | 1.300 | 1.226 | 1.226 |
| Viscoelasticity | Upper Surface Layer | 0.0768 | 0.0961 | 0.1100 | 0.1205 | 0.1285 | 0.0655 | 0.0761 |
| | Core Layer | 0.0593 | 0.0727 | 0.0828 | 0.0886 | 0.0915 | 0.0520 | 0.0601 |
| | Core Layer / Upper Surface Layer | 0.7721 | 0.7568 | 0.7527 | 0.7353 | 0.7121 | 0.7939 | 0.7898 |
| Hardness | Upper Surface Layer | 70 | 71 | 72 | 73 | 75 | 67 | 69 |
| | Core layer | 55 | 54 | 53 | 53 | 52 | 56 | 55 |
| | Core Layer / Upper Surface Layer | 0.7857 | 0.7606 | 0.7361 | 0.7260 | 0.7067 | 0.8358 | 0.7971 |
| Sagging rate | Upper Surface Layer | 41.6 | 38.0 | 35.3 | 34.0 | 32.0 | 43.7 | 40.7 |
| | Core Layer | 52.3 | 58.5 | 63.2 | 65.0 | 66.0 | 49.0 | 53.0 |
| | Core Layer / Upper Surface Layer | 1.257 | 1.540 | 1.790 | 1.912 | 2.063 | 1.121 | 1.302 |

From Table 2, in order to satisfy all the properties of the above (1) to (3), it could be confirmed that the content of the high-molecular-weight polyol (PPG5000) is preferably 88 parts by mass to 100 parts by mass, more preferably 88 to 96 parts by mass and the content of the low-molecular-weight polyol (PPG1000) is preferably 0 part by mass to 12 parts by mass, more preferably 4 parts by mass to 12 parts by mass.

From these results, the ratio $(\tan \delta_{n+1}/\tan \delta_1)$ of the viscoelastic property of the core layer to the viscoelastic property of the upper surface layer in the cushion pad can be set in the range of 0.7 to 0.8 by altering the content of water and the ratio of the low-molecular-weight to high-molecular-weight in the polyol. Therefore, it could be confirmed that a cushion pad having the property that the core layer sags more positively than the upper surface layer could be provided.

INDUSTRIAL APPLICABILITY

The present invention can provide a cushion pad in which the core layer sags more positively than the upper surface layer so that an improved fit is provided in a sitting condition.

EXPLANATION OF REFERENCE NUMERALS

1 ... Cushion Pad, 2 ... Upper Surface Layer, 2a ... Thickness of Upper Surface Layer before Compression, 2b ... Thickness of Upper Surface Layer in Compressed State, 3 ... Core Layer, 3a ... Thickness of Core Layer before Compression, 3b ... Thickness of Core Layer in Compressed State

**Claims**

1. A cushion pad adapted to be used in a vehicle seat, the cushion pad being made of urethane foam and integrally molded, the cushion pad comprising an upper surface layer and a core layer,
   **characterized in that** a viscoelastic property $(\tan \delta_1)$ of the upper surface layer of the cushion pad at 36°C and at a frequency of 1 Hz is 0.065 to 0.144,
   a viscoelastic property $(\tan \delta_{core})$ of the core layer of the cushion pad at 36°C and at the frequency of 1 Hz is 0.052 to 0.102, and
   a ratio of the viscoelastic property $\tan(\delta_{core})$ of the core layer at 36°C and at the frequency of 1 Hz to the viscoelastic property $(\tan \delta_1)$ of the upper surface layer at 36°C and at the frequency of 1 Hz is in a range of 0.7 to 0.8.

2. The cushion pad according to claim 1, wherein, when the entire cushion pad is compressed by 40 to 50% in a thickness direction, a ratio of a sagging rate $(T_{core})$ of the core layer to a sagging rate $(T_1)$ of the upper surface layer is in a range of 1.1 to 2.5.

3. The cushion pad according to claim 2, wherein, from the upper surface layer to the core layer, viscoelastic property $(\tan \delta)$ of each layer at 36°C and at the frequency of 1 Hz gradually decreases and a sagging rate of each layer gradually increases.

4. The cushion pad according to any one of claims 1 to 3, wherein the cushion pad contains a polyol and a polyisocyanate, and contains 1.8 to 4.0 parts by mass of water with respect to 100 parts by mass of the polyol.

5. The cushion pad according to claim 4, wherein the polyol contains a high-molecular-weight polyol having a number-average molecular weight of 3500 to 8000 and a low-molecular-weight polyol having a number-average molecular weight of 500 to 3000 and 2 to 4 functional groups.

6. The cushion pad according to one of the preceding claims, wherein the cushion pad is divided into a first layer to a 2n+1th layer, where n is an integer of 1 to 5, the first layer being the upper surface layer and the n+1th layer being the core layer.

7. A method for manufacturing a urethane foam cushion pad according to claim 1,
   the method comprising steps of reacting a foaming material containing a polyol and a polyisocyanate and containing 1.8 to 4.0 parts by mass of water with respect to 100 parts by mass of the polyol, and foaming and curing the material in a forming mold,
   wherein a high-molecular-weight polyol having a number-average molecular weight of 3500 to 8000 and a low-molecular-weight polyol having a number-average molecular weight of 500 to 3000 and 2 to 4 functional groups are

used in combination as the polyol.

**Patentansprüche**

1. Kissenpolster, welches dazu geeignet ist, in einem Fahrzeugsitz verwendet zu werden, wobei das Kissenpolster aus Urethanschaum hergestellt und integral geformt ist, wobei das Kissenpolster eine obere Oberflächenschicht und eine Kernschicht aufweist,
**dadurch gekennzeichnet, dass** eine viskoelastische Eigenschaft (tan $\delta_1$) der oberen Oberflächenschicht des Kissenpolsters bei 36°C und bei einer Frequenz von 1 Hz 0,065 bis 0,144 beträgt,
eine viskoelastische Eigenschaft (tan $\delta_{core}$) der Kernschicht des Kissenpolsters bei 36°C und bei der Frequenz von 1 Hz 0,052 bis 0,102 beträgt, und
ein Verhältnis der viskoelastischen Eigenschaft (tan $\delta_{core}$) der Kernschicht bei 36°C und bei der Frequenz von 1 Hz zu der viskoelastischen Eigenschaft (tan $\delta_1$) der oberen Oberflächenschicht bei 36°C und bei der Frequenz von 1 Hz in einem Bereich von 0,7 bis 0,8 liegt.

2. Kissenpolster nach Anspruch 1, bei dem, wenn das gesamte Kissenpolster in einer Dickenrichtung um 40 bis 50 % komprimiert wird, ein Verhältnis einer Nachgiebigkeitsrate ($T_{core}$) der Kernschicht zu einer Nachgiebigkeitsrate ($T_1$) der oberen Oberflächenschicht in einem Bereich von 1,1 bis 2,5 liegt.

3. Kissenpolster nach Anspruch 2, bei dem, von der oberen Oberflächenschicht zu der Kernschicht, eine viskoelastische Eigenschaft (tan $\delta$) von jeder Schicht bei 36°C und bei der Frequenz von 1 Hz graduell abnimmt und eine Nachgiebigkeitsrate von jeder Schicht graduell zunimmt.

4. Kissenpolster nach einem der Ansprüche 1 bis 3, wobei das Kissenpolster ein Polyol und ein Polyisozyanat aufweist und 1,8 bis 4,0 Massenanteile an Wasser in Bezug auf 100 Massenanteile des Polyols enthält.

5. Kissenpolster nach Anspruch 4, bei dem das Polyol ein Hochmolekulargewichts-Polyol mit einem Zahlendurchschnittsmolekulargewicht von 3500 bis 8000 und ein Niedrigmolekulargewichts-Polyol mit einem Zahlendurchschnittsmolekulargewicht von 500 bis 3000 und 2 bis 4 funktionelle Gruppen enthält.

6. Kissenpolster nach einem der vorstehenden Ansprüche, wobei das Kissenpolster in eine erste Schicht bis eine 2n+1-te Schicht unterteilt ist, wobei n eine ganze Zahl von 1 bis 5 darstellt, wobei die erste Schicht die obere Oberflächenschicht und die n+1-te Schicht die Kernschicht ist.

7. Verfahren zum Herstellen eines Urethanschaumkissenpolsters nach Anspruch 1,
wobei das Verfahren die Schritte umfasst, bei denen ein Schaummaterial umgesetzt wird, das ein Polyol und ein Polyisozyanat enthält und 1,8 bis 4,0 Massenanteile an Wasser in Bezug auf 100 Massenanteile des Polyols enthält, und das Material in einer Formgebungsform geschäumt und gehärtet wird,
wobei ein Hochmolekulargewichts-Polyol mit einem Zahlendurchschnittsmolekulargewicht von 3500 bis 8000 und einem Niedrigmolekulargewichts-Polyol mit einem Zahlendurchschnittsmolekulargewicht von 500 bis 3000 und 2 bis 4 funktionellen Gruppen kombiniert als das Polyol verwendet werden.

**Revendications**

1. Garniture de coussin adaptée pour être utilisée dans un siège de véhicule, la garniture de coussin étant constituée d'une mousse d'uréthane et étant moulée d'une seul tenant, la garniture de coussin comprenant une couche de surface supérieure et une couche centrale,
**caractérisée en ce qu'**une propriété viscoélastique (tan $\delta_1$) de la couche de surface supérieure de la garniture de coussin à 36°C et à une fréquence de 1 Hz est de 0,065 à 0,144,
une propriété viscoélastique (tan $\delta_{core}$) de la couche centrale de la garniture de coussin à 36 °C et à la fréquence de 1 Hz est de 0,052 à 0,102, et
un rapport entre la propriété viscoélastique (tan $5_{core}$) de la couche centrale à 36°C et à la fréquence de 1 Hz et la propriété viscoélastique (tan $\delta_1$) de la couche de surface supérieure à 36°C et à la fréquence de 1 Hz est dans une plage de 0,7 à 0,8.

2. Garniture de coussin selon la revendication 1, dans laquelle, lorsque la garniture de coussin dans son ensemble est comprimée de 40 à 50 % dans une direction d'épaisseur, un rapport entre un taux d'affaissement ($T_{core}$) de la couche centrale et un taux d'affaissement ($T_1$) de la couche de surface supérieure est dans une plage de 1,1 à 2,5.

3. Garniture de coussin selon la revendication 2, dans laquelle, de la couche de surface supérieure à la couche centrale, la propriété viscoélastique (tan $\delta$) de chaque couche à 36°C et à la fréquence de 1 Hz diminue progressivement et un taux d'affaissement de chaque couche augmente progressivement.

4. Garniture de coussin selon l'une quelconque des revendications 1 à 3, dans laquelle la garniture de coussin contient un polyol et un polyisocyanate, et contient 1,8 à 4,0 parties en masse d'eau pour 100 parties en masse du polyol.

5. Garniture de coussin selon la revendication 4, dans laquelle le polyol contient un polyol à haut poids moléculaire ayant un poids moléculaire moyen en nombre de 3500 à 8000 et un polyol à bas poids moléculaire ayant un poids moléculaire moyen en nombre de 500 à 3000 et 2 à 4 groupes fonctionnels.

6. Garniture de coussin selon l'une des revendications précédentes, dans laquelle la garniture de coussin est divisée en une première couche à une 2n+1$^{ème}$ couche, où n est un entier de 1 à 5, la première couche étant la couche de surface supérieure et la n+1$^{ème}$ couche étant la couche centrale.

7. Procédé de fabrication d'une garniture de coussin en mousse d'uréthane selon la revendication 1,
le procédé comprenant les étapes consistant à faire réagir un matériau expansible contenant un polyol et un polyisocyanate et contenant 1,8 à 4,0 parties en masse d'eau pour 100 parties en masse du polyol, et expanser et durcir le matériau dans un moule de formage,
dans lequel un polyol à haut poids moléculaire ayant un poids moléculaire moyen en nombre de 3500 à 8000 et un polyol à bas poids moléculaire ayant un poids moléculaire moyen en nombre de 500 à 3000 et 2 à 4 groupes fonctionnels sont utilisés en combinaison en guise de polyol.

## FIG. 1

| 1ST LAYER | UPPER SURFACE LAYER |
| 2ND LAYER | |
| 3RD LAYER | |
| 4TH LAYER | CORE LAYER |
| 5TH LAYER | |
| 6TH LAYER | |
| 7TH LAYER | |

EP 2 537 445 B1

FIG. 2A

UPPER SURFACE LAYER 2

CORE LAYER 3

1ST LAYER

2ND LAYER

3RD LAYER

4TH LAYER

5TH LAYER

6TH LAYER

7TH LAYER

2a

3a

*FIG. 2B*

VISCOELASTIC PROPERTY (tan δ)

FIG. 3A

◆ UPPER-SURFACE LAYER
■ CORE LAYER

FREQUENCY Hz

EP 2 537 445 B1

VISCOELASTIC PROPERTY (tan δ)

*FIG. 3B*

◆ UPPER-SURFACE LAYER
■ CORE LAYER

FREQUENCY Hz

EP 2 537 445 B1

FIG. 3C

VISCOELASTIC PROPERTY (tan δ)

UPPER-SURFACE LAYER
CORE LAYER

FREQUENCY Hz

EP 2 537 445 B1

SAGGING RATE (%)             *FIG. 4*

EP 2 537 445 B1

## FIG. 5

(a) 0mm 10mm 20mm 30mm 40mm

(b) 0mm 10mm 20mm 30mm 40mm

(c) 0mm 10mm 20mm 30mm 40mm

EP 2 537 445 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050210595 A1
- JP 9051918 A
- JP 2002065409 A